# EUROPÄISCHE PATENTSCHRIFT

(11) **EP 2 326 533 B1**
(45) Veröffentlichungstag und Bekanntmachung des Hinweises auf die Patenterteilung: **25.10.2017**
(21) Anmeldenummer: 09782809.9
(22) Anmeldetag: 09.09.2009
(51) Int. Cl.: B60Q 1/12, B60Q 1/14

(54) **VERFAHREN UND VORRICHTUNG ZUM STEUERN VON VERTIKALEN HELL-DUNKEL-GRENZEN BEI SCHEINWERFERN INNERHALB EINES SCHWENKBEREICHS**
METHOD AND DEVICE FOR CONTROLLING VERTICAL LIGHT-DARK LIMITS IN HEADLIGHTS WITHIN A TILT RANGE
PROCÉDÉ ET DISPOSITIF DE COMMANDE DES LIMITES VERTICALES DU CLAIR-OBSCUR DES PHARES À L INTÉRIEUR D UNE PLAGE D ORIENTATION

(30) Priorität: 13.09.2008 DE 102008047025
(43) Veröffentlichungstag der Anmeldung: 01.06.2011
(60) Teilanmeldung: 17176935.9
(73) Patentinhaber: Hella KGaA Hueck & Co., 59552 Lippstadt (DE)
(72) Erfinder: SCHWARZ, Sergej, 70825 Korntal-Münchingen (DE); FLORISSEN, Georg, 59597 Erwitte (DE); HÜSTER, Christian, 33154 Salzkotten (DE); WILKS, Carsten, 59555 Lippstadt (DE); SCHMIDT, Christian, 33106 Paderborn (DE); IRMSCHER, Tobias, 3334 Gütersloh (DE)
(74) Vertreter: Kirchner, Sven
(86) Internationale Anmeldenummer: PCT/EP2009/061680
(87) Internationale Veröffentlichungsnummer: WO 2010/029102

(56) Entgegenhaltungen:
- EP-A- 1 757 486
- EP-A- 2 060 442
- WO-A-2008/037388
- DE-A1- 19 602 622
- DE-A1-102008 012 327
- GB-A- 1 352 999
- US-A1- 2008 106 886

## Beschreibung

Verfahren und Vorrichtung zum Steuern von vertikalen Hell-Dunkel-Grenzen bei Scheinwerfern innerhalb eines Schwenkbereichs eines Kraftfahrzeugs.
Aus der Offenlegungsschrift mit der Veröffentlichungsnummer DE 21 44 197 ist ein Kraftfahrzeugscheinwerfer bekannt, bei dem die vertikalen Hell-Dunkel-Grenzen eingestellt werden können. Die vertikalen Hell-Dunkel-Grenzen werden durch den Scheinwerfer automatisch so eingestellt, dass eine Blendung des vorausfahrenden Verkehrs oder des entgegenkommenden Verkehrs möglichst vermieden wird. Dazu können die vertikalen Hell-Dunkel-Grenzen des von dem Scheinwerfer abgestrahlten Lichts nach rechts oder links verschoben werden. Die Verschiebung der Hell-Dunkel-Grenzen erfolgt so, dass der linke Scheinwerfer des Fahrzeugs links an dem Objekt vorbei leuchtet, dessen Fahrer möglicherweise geblendet werden könnte. Entsprechend wird der rechte Scheinwerfer so eingestellt, dass das von diesem Scheinwerfer abgestrahlte Licht rechts von dem Fahrzeug liegt, das entblendet wird. Dadurch entsteht vor dem Kraftfahrzeug ein unbeleuchteter Bereich, der Tunnel genannt wird, in dem sich das entblendete Fahrzeug befindet. Der Tunnel wird durch die linke bzw. rechte Hell-Dunkel-Grenze begrenzt.
Um ein automatisches Einstellen der vertikalen Hell-Dunkel-Grenzen der Scheinwerfer erreichen zu können, weist der Scheinwerfer ein Sensorsystem auf. Das Sensorsystem erkennt Lichtquellen des vorausfahrenden oder entgegenkommenden Fahrzeugs, d. h. entweder die Frontscheinwerfer oder aber die Rückleuchten des Fahrzeugs. Weiterentwicklungen zu dem in der genannten Offenlegungsschrift DE 21 44 197 offenbarten Scheinwerfer sind Steuervorrichtungen für Scheinwerfer, die einen ersten Eingang für ein erstes Signal aufweisen. Dieses erste Signal gibt bezogen auf die Längsachse des Fahrzeugs eine Richtung an, in welcher dem Kraftfahrzeug eine Lichtquelle eines zweiten Fahrzeugs entgegenkommt oder sich von dem ersten Fahrzeug in gleicher Fahrtrichtung fortbewegt. Die Steuervorrichtung kann ein Stellsignal sowohl für den rechten Scheinwerfer als auch für den linken Scheinwerfer erzeugen. Die Stellsignale dienen zum Einstellen der vertikalen Hell-Dunkel-Grenzen in Abhängigkeit von dem ersten Signal. Mit der Steuervorrichtung wird die rechte vertikale Hell-Dunkel-Grenze des Tunnels zum Entblenden eines entgegenkommenden oder vorausfahrenden zweiten Fahrzeugs geschwenkt. Ebenso wird die linke vertikale Hell-Dunkel-Grenze des Tunnels zum Entblenden eines entgegenkommenden oder vorausfahrenden zweiten Fahrzeugs geschwenkt.

Gegenstand der Weiterentwicklungen ist auch, dass nicht ein erstes Signal berücksichtigt wird, das die Richtung des entgegenkommenden oder vorrausfahrenden Fahrzeugs anzeigt sondern zwei erste Signale, wobei das eine erste Signal die Richtung einer linken Kante einer äußerst linken Lichtquelle und das andere erste Signal die Richtung einer rechten Kante einer äußerst rechten Lichtquelle des entgegenkommenden oder vorrausfahrenden Fahrzeugs anzeigt. Diese Richtungen werden auch als Objektwinkel bezeichnet.

Als Grundlage für die Ermittlung der vertikalen Hell-Dunkel-Grenzen dienen die über den ersten Eingang eingelesenen Objektwinkel, unter welchen das vorausfahrende oder entgegenkommende zweite Fahrzeug ermittelt wird. Es sei darauf hingewiesen, dass der Objektwinkel sich in der Regel nicht auf die Kontur des zweiten Fahrzeugs im Ganzen, sondern nur auf die Position der jeweils äußersten Lichtquelle des zweiten Fahrzeugs bezieht, die von einem Sensorsystem erkannt werden. Dieses ist bei entgegenkommenden Fahrzeugen der rechte oder linke Frontscheinwerfer und bei vorausfahrenden Fahrzeugen das rechte oder linke Rücklicht.

Die bekannten Steuervorrichtungen sind in der Regel so ausgestaltet, dass die rechte Hell-Dunkel-Grenze und die linke Hell-Dunkel-Grenze nur innerhalb eines vorgegebenen Bereichs eingestellt werden können. Diese Bereiche sind beispielsweise so gewählt, dass die rechte Hell-Dunkel-Grenze nicht links von der Fahrzeuglängsrichtung und die linke Hell-Dunkel-Grenze nicht rechts von der Fahrzeuglängsrichtung liegen kann. Dieses hat den Zweck, dass Verkehrsteilnehmer außerhalb der Fahrbahnen, z.B. Arbeitsmaschinen auf angrenzenden Feldern, Fahrzeuge auf Parkplätzen oder dergleichen, nicht geblendet werden.

Durch die Begrenzung des Schwenkbereichs der vertikalen Hell-Dunkel-Grenzen wird allerdings verhindert, dass bei einer Kurvenfahrt der Tunnel nur so schmal gemacht wird, wie es notwendig ist, um den vorausfahrenden oder entgegenkommenden Verkehr zu entblenden. Der Tunnel ist vielmehr größer als unbedingt notwendig, was dazu führt, dass die Fahrbahn bei einer Kurvenfahrt nicht immer ausgeleuchtet ist.

Der Erfindung liegt daher die Aufgabe zugrunde eine Steuervorrichtung und ein Verfahren zum Steuern der vertikalen Hell-Dunkel-Grenzen bei Scheinwerfern so zu verbessern, das bei aktivierter Steuerung der vertikalen Hell-Dunkel-Grenzen in Kurvenabschnitten und in Geradeausabschnitten stets eine optimale Ausleuchtung des Vorfeldes des Kraftfahrzeuges erreicht wird und zugleich Fahrzeuge oder Objekte neben dem Straßenverlauf entblendet werden. Die Steuervorrichtung bzw. das Verfahren soll insbesondere so verbessert werden, dass auch bei Kurvenfahrten eine optimale Ausleuchtung der Fahrbahn gewährleistet ist und der unbeleuchtete Tunnel so eng wie notwendig ist.

Diese Aufgabe wird erfindungsgemäß durch eine Steuervorrichtung nach Anspruch 1 und durch ein Verfahren nach Anspruch 6 gelöst.

Nach Anspruch 1 wird die Aufgabe dadurch gelöst, dass die Steuervorrichtung einen zweiten Eingang für ein zweites Signal aufweist. Dieses zweite Signal zeigt den Radius einer von dem Kraftfahrzeug durchfahrenen oder noch zu durchfahrenden Kurve an. In Abhängigkeit von dem zweiten Signal kann dann durch die erfindungsgemäß geeignete und eingerichtete Steuervorrichtung zumindest die linke Grenze des Schwenkbereichs der rechten Hell-Dunkel-Grenze und die rechte Grenze des Schwenkbereichs in der linken Hell-Dunkel-Grenze vorgegeben werden.

Es werden also anders als bei den aus dem Stand der Technik bekannten Steuervorrichtungen keine festen Grenzen für den Schwenkbereich der Hell-Dunkel-Grenzen vorgegeben. Diese können vielmehr an den Radius der durchfahrenen oder zu durchfahrenden Kurve angepasst werden. Dadurch ist es möglich den unbeleuchteten Tunnel vor dem Kraftfahrzeug so eng wie möglich einzustellen und eine stets optimale Ausleuchtung der vor dem Kraftfahrzeug liegenden Fahrbahn zu erhalten. Dadurch wird die Sicherheit aller Verkehrsteilnehmer erhöht.

Eine erfindungsgemäße Steuervorrichtung kann ein Berechnungsmittel zum Ermitteln der linken Grenze des Schwenkbereichs der rechten Hell-Dunkel-Grenze und der rechten Grenze des Schwenkbereichs der linken Hell-Dunkel-Grenze in Abhängigkeit von dem zweiten Signal, das heißt in Abhängigkeit von dem Kurvenradius aufweisen. Das Berechnungsmittel kann ebenso dazu geeignet sein, die einzustellenden rechten bzw. linken Hell-Dunkel-Grenzen zu berechnen.

Bei einer Geradeausfahrt eines Kraftfahrzeugs mit der erfindungsgemäßen Steuervorrichtung wird die linke Grenze des Schwenkbereichs der rechten Hell-Dunkel-Grenze und die rechte Grenze des Schwenkbereichs der linken Hell-Dunkel-Grenze auf der Längsachse des Kraftfahrzeugs, d.h. bei 0° liegen.

Bei einer Kurvenfahrt des Kraftfahrzeugs hingegen kann in Abhängigkeit von der Größe des Radius der durchfahrenen oder zu durchfahrenden Kurve die linke Grenze des Schwenkbereichs der rechten Hell-Dunkel-Grenze beziehungsweise die rechte Grenze des Schwenkbereichs der linken Hell-Dunkel-Grenze verschoben werden. Die linke Grenze des Schwenkbereichs der rechten Hell-Dunkel-Grenze wird vorzugsweise bei einer Linkskurve nach links verschoben und schließt mit der Längsachse des Kraftfahrzeugs einen Winkel kleiner als 0° ein. Die rechte Grenze des Schwenkbereichs der linken Hell-Dunkel-Grenze wird vorzugsweise bei einer Rechtskurve nach rechts verschoben und spannt mit der Längsachse des Kraftfahrzeugs einen zweiten Winkel auf, der größer als 0° ist.

Eine erfindungsgemäße Steuervorrichtung kann zum Ermitteln eines Schwenkwinkels für adaptives Kurvenlicht geeignet und eingerichtet sein. Dadurch können die Scheinwerfer des Kraftfahrzeugs beim Durchfahren einer Kurve oder vor dem Durchfahren einer Kurve in Kurvenrichtung geschwenkt werden. Eine solche Steuervorrichtung kann so ausgestaltet sein, das als Schwenkwinkel für das adaptive Kurvenlicht der Winkel für die Grenze der rechten bzw. linken Hell-Dunkel-Grenze eingestellt wird.

Anhand der beigefügten Zeichnungen wird die Erfindung nachfolgend näher erläutert. Dabei zeigt:
- Fig. 1: die Schwenkbereiche der rechten und linken vertikalen Hell-Dunkel-Grenze bei der Geradeausfahrt,
- Fig. 2: die nach rechts geschwenkte linke vertikale Hell-Dunkel-Grenze bei einer Fahrt durch eine Rechtskurve,
- Fig. 3: ein Blockschaltbild einer Anordnung mit einer erfindungsgemäßen Steuervorrichtung und

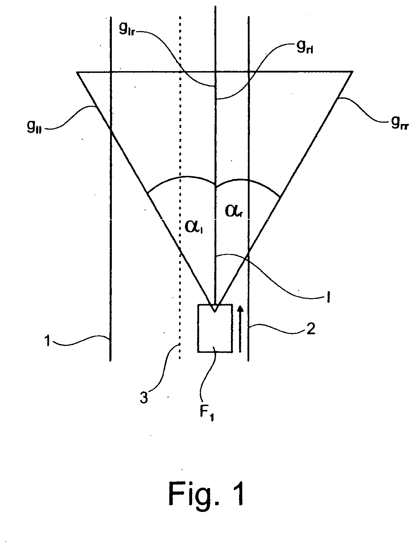

Fig. 1 zeigt ein Kraftfahrzeug F₁ bei der Geradeausfahrt auf einer Straße, die durch eine linke Fahrbahn Begrenzung 1, eine rechte Fahrbahnbegrenzung 2 und einen Mittelstreifen 3 gekennzeichnet ist. Das Kraftfahrzeug F₁ ist mit Scheinwerfern ausgestattet, deren vertikale Hell-Dunkel-Grenzen einstellbar sind, um vorausfahrenden oder entgegenkommenden Verkehr zu Entblenden. Zum Entblenden des entgegenkommenden oder vorausfahrenden Verkehrs werden die Scheinwerfer so geschwenkt, dass das entgegenkommende oder vorausfahrende Fahrzeug in einem nicht beleuchteten Bereich der Fahrbahn liegt. Dieser nicht beleuchtete Fahrbahnbereich, auch Tunnel genannt, wird links durch die linke vertikale Hell-Dunkel-Grenze und rechts durch die rechte vertikale Hell-Dunkel-Grenze begrenzt.

Das erfindungsgemäße Steuergerät zum Einstellen der vertikalen Hell-Dunkel-Grenze gibt Schwenkbereiche vor, innerhalb derer die linke vertikale Hell-Dunkel-Grenze und die rechte vertikale Hell-Dunkel-Grenze eingestellt werden können, ohne zu einer Gefährdung von anderen Verkehrsteilnehmern zu führen. So kann die rechte vertikale Hell-Dunkel-Grenze zwischen der Grenze gᵣᵣ und der Grenze gᵣₗ geschwenkt werden. Der Schwenkbereich der rechten vertikalen Hell-Dunkel-Grenze ist durch diese beiden Grenzen gᵣᵣ, gᵣₗ beschränkt. Analog ist auch der Schwenkbereich der linken vertikalen Hell-Dunkel-Grenze beschränkt. Die linke Grenze für den Schwenkbereich der linken vertikalen Hell-Dunkel-Grenze ist mit gₗₗ und die rechte Grenze des Schwenkbereichs mit gₗᵣ bezeichnet.

Die rechte Grenze gₗᵣ des Schwenkbereichs für die linke vertikale Hell-Dunkel-Grenze und die linke Grenze gᵣₗ des Schwenkbereichs für die rechte vertikale Hell-Dunkel-Grenze fallen zusammen und liegen beide auf der Fahrzeuglängsachse l des Kraftfahrzeugs F₁.

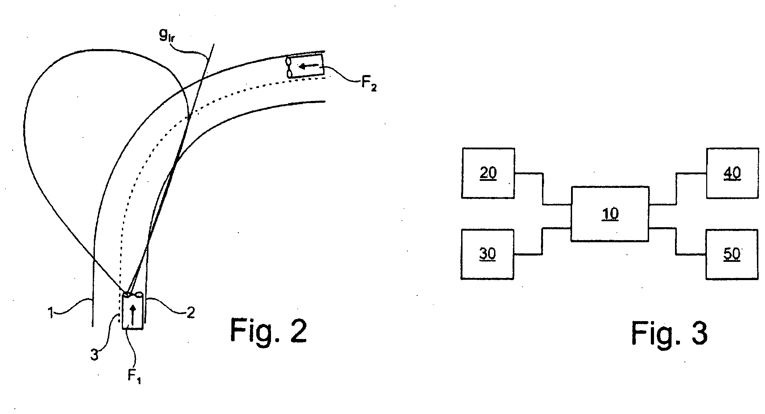

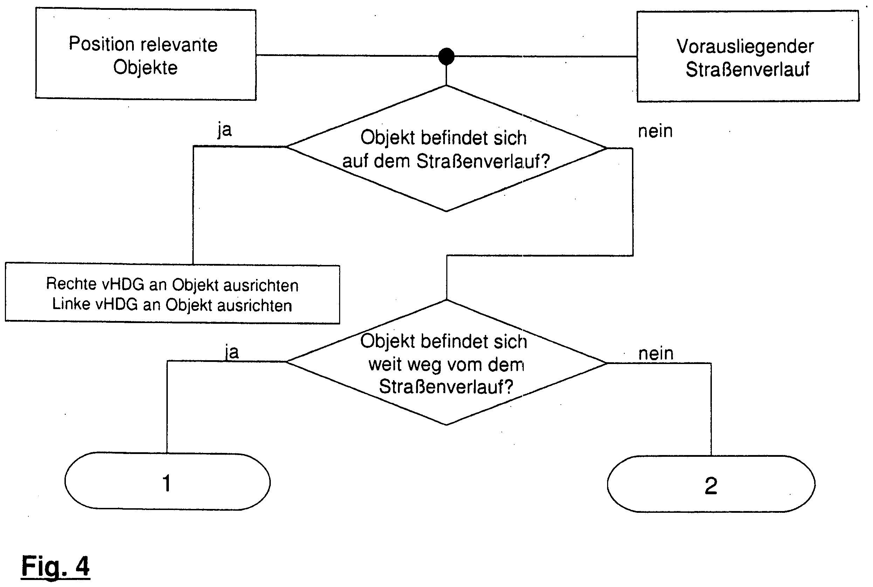

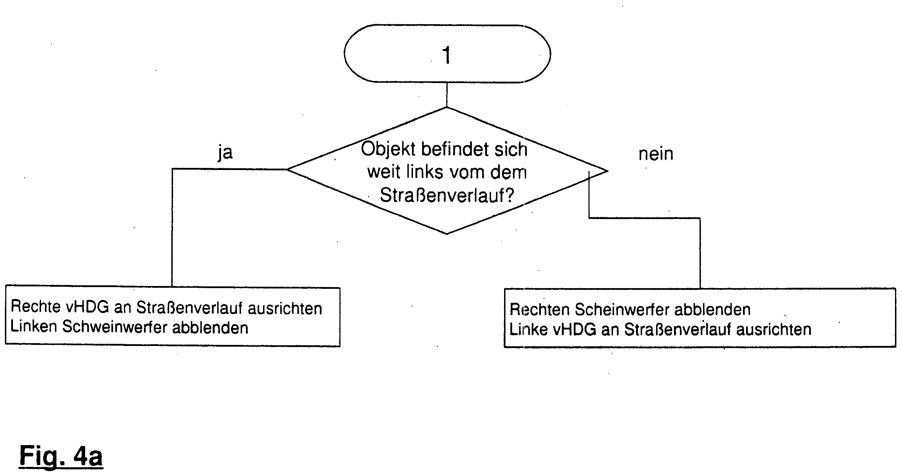

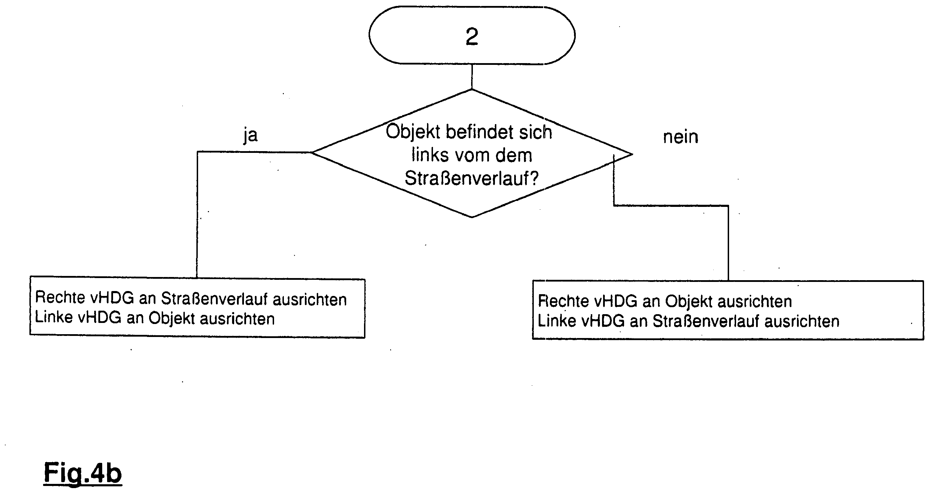

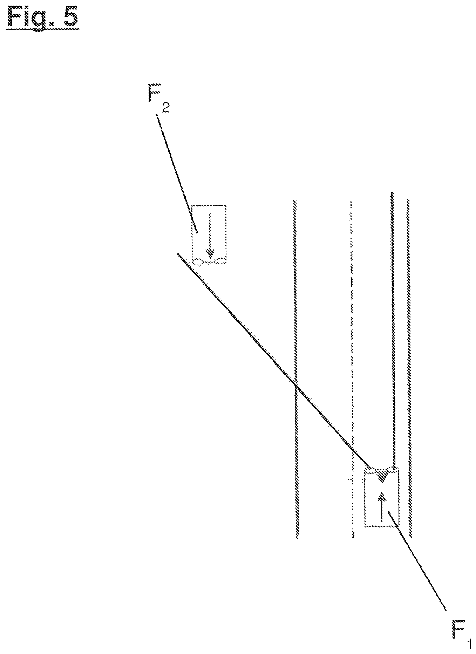

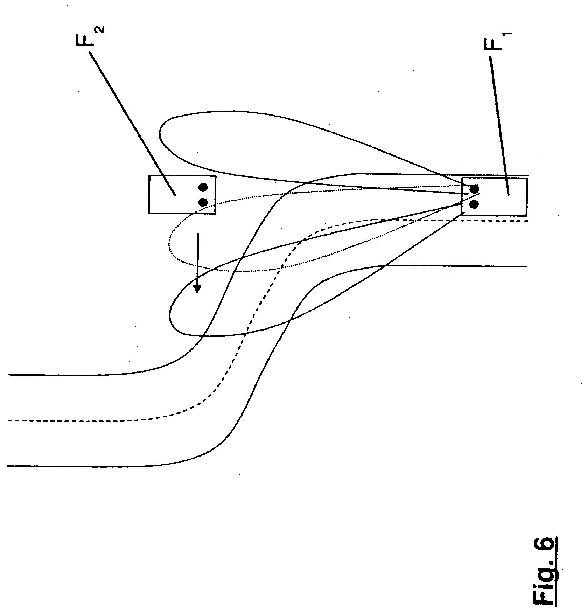

Durchfährt das Kraftfahrzeug F₁ mit der erfindungsgemäßen Steuerungsvorrichtung dagegen eine Rechtskurve, wie in Fig. 2 dargestellt, wird die rechte Grenze gₗᵣ des Schwenkbereichs der linken vertikalen Hell-Dunkel-Grenze nach rechts verschoben. Die rechte Grenze gₗᵣ spannt mit der Fahrzeuglängsachse nun einen Winkel größer als 0° auf. Dadurch gelingt es, die vor dem Kraftfahrzeug F₁ liegende Fahrbahn besser auszuleuchten und den Tunnel so einzuengen, dass er auf das notwendige beschränkt wird.

Eine erfindungsgemäße Steuervorrichtung 10 ist vorzugsweise so angeordnet, dass sie Stellsignale an einen rechten Scheinwerfer 50 und einen linken Scheinwerfer 40 senden kann. Ferner ist sie mit einer Vorrichtung verbunden, mit der der Objektwinkel ermittelt werden kann. Diese Vorrichtung 20 liefert an die Steuervorrichtung 10 ein Signal über den Objektwinkel des vor dem Fahrzeug F₁ fahrenden oder des dem Fahrzeug F₁ entgegenkommenden Fahrzeugs F₂. Ferner ist die erfindungsgemäße Steuervorrichtung 10 mit einem Mittel verbunden, mit dem der Radius der durchfahrenen und/oder zu durchfahrenden Kurve ermittelt wird. Der Kurvenradius kann dabei auf verschiedene Art und Weise ermittelt werden. Denkbar ist beispielsweise, dass der Kurvenradius anhand des Lenkradwinkels, der Gierrate, des Einschlagswinkels der Vorderräder, Daten eines Satellitennavigationssystems oder aus Kameradaten ermittelt wird.

### Bezugszeichenliste

- F₁: erstes Kraftfahrzeug
- F₂: entgegenkommendes Fahrzeug
- gₗᵣ: rechte Grenze des Schwenkbereichs der linken vertikalen Hell-Dunkel-Grenze
- gₗₗ: linke Grenze des Schwenkbereichs der linken vertikalen Hell-Dunkel-Grenze
- gᵣᵣ: rechte Grenze des Schwenkbereichs der rechten vertikalen Hell-Dunkel-Grenze
- gᵣₗ: linke Grenze des Schwenkbereichs der rechten vertikalen Hell-Dunkel-Grenze
- l: Längsachse des ersten Kraftfahrzeugs

## Patentansprüche

1. Vorrichtung zum Steuern von vertikalen Hell-Dunkel-Grenzen bei Scheinwerfern eines Kraftfahrzeugs innerhalb eines Schwenkbereichs, wobei
- die Steuervorrichtung (10) einen ersten Eingang für ein erstes Signal aufweist, welches die auf eine Längsachse (l) des Kraftfahrzeugs bezogene Richtung angibt, in welcher dem Kraftfahrzeug (F₁) eine Lichtquelle eines Fahrzeugs (F₂) entgegenkommt oder sich vor dem Kraftfahrzeug (F₁) in gleicher Fahrtrichtung fortbewegt,
- wobei die Steuervorrichtung zum Erzeugen eines Stellsignals für den rechten Scheinwerfer (50) und eines Stellsignals für den linken Scheinwerfer (40) des Fahrzeugs (F₁) zum Einstellen der vertikalen Hell-Dunkel-Grenzen in Abhängigkeit von dem ersten Signal geeignet und eingerichtet ist,
- mit welchem eine rechte vertikale Hell-Dunkel-Grenze und eine linke vertikale Hell-Dunkel-Grenze zum Entblenden eines entgegenkommenden oder vorausfahrenden Fahrzeugs (F₂) eingestellt werden können,
- wobei die Steuervorrichtung (10) geeignet und eingerichtet ist,
- die rechte Hell-Dunkel-Grenze in einem vorgegebenen Schwenkbereich für die rechte Hell-Dunkel-Grenze zwischen einer rechten Grenze und einer linken Grenze einzustellen und
- die linke Hell-Dunkel-Grenze in einem vorgegebenen Schwenkbereich zwischen einer linken Grenze und einer rechten Grenze einzustellen,
**dadurch gekennzeichnet,**
- **dass** die Steuervorrichtung (10) einen zweiten Eingang für ein zweites Signal aufweist, welches den Radius einer von dem Kraftfahrzeug durchfahrenen oder zu durchfahrenden Kurve anzeigt, und
- **dass** die Steuervorrichtung (10) geeignet und eingerichtet ist, zumindest die linke Grenze des Schwenkbereichs der rechten Hell-Dunkel-Grenze und die rechte Grenze des Schwenkbereichs der linken Hell-Dunkel-Grenze in Abhängigkeit von dem zweiten Signal vorzugeben.

2. Steuervorrichtung (10) nach Anspruch 1, **dadurch gekennzeichnet, dass** die Steuervorrichtung ein Berechnungsmittel zum Ermitteln der linken Grenze des Schwenkbereichs der rechten Hell-Dunkel-Grenze und die rechte Grenze des Schwenkbereichs der linken Hell-Dunkel-Grenze in Abhängigkeit von dem zweiten Signal hat.

3. Steuervorrichtung (10) nach Anspruch 2, **dadurch gekennzeichnet, dass** das Berechnungsmittel zum Ermitteln der einzustellenden rechten bzw. linken Hell-Dunkel-Grenze geeignet und eingerichtet ist.

4. Steuervorrichtung (10) nach einem der Ansprüche 2 bis 3, **dadurch gekennzeichnet, dass** das Berechnungsmittel geeignet und eingerichtet ist, die Grenzen so zu berechnen,
- dass die linke Grenze des Schwenkbereichs der rechten Hell-Dunkel-Grenze bei einer Linkskurve nach links verschoben wird und mit der Längsachse (l) des Kraftfahrzeugs einen ersten Winkel kleiner als 0° aufspannt und
- dass die rechte Grenze des Schwenkbereichs der linken Hell-Dunkel-Grenze bei einer Rechtskurve nach rechts verschoben wird und mit der Längsachse des Kraftfahrzeugs einen zweiten Winkel größer als 0° aufspannt.

5. Steuervorrichtung (10) nach Anspruch 4, **dadurch gekennzeichnet, dass** das Berechnungsmittel geeignet und eingerichtet ist, die Grenzen so zu berechnen,
- dass die rechte Grenze des Schwenkbereichs der rechten Hell-Dunkel-Grenze bei einer Linkskurve um den ersten Winkel nach links verschoben wird und
- dass die linke Grenze des Schwenkbereichs der linken Hell-Dunkel-Grenze bei einer Rechtskurve um den zweiten Winkel nach rechts verschoben wird.

6. Verfahren zum Steuern von vertikalen Hell-Dunkel-Grenzen bei Scheinwerfern eines Kraftfahrzeugs innerhalb eines Schwenkbereichs, wobei
- die Steuervorrichtung (10) über einen ersten Eingang ein erstes Signal einliest, welches die auf eine Längsachse (l) des Kraftfahrzeugs bezogene Richtung angibt, in welcher dem Kraftfahrzeug (F₁) eine Lichtquelle eines Fahrzeugs (F₂) entgegenkommt oder sich vor dem Kraftfahrzeug (F₁) in gleicher Fahrtrichtung fortbewegt,
- die Steuervorrichtung (10) in Abhängigkeit von dem ersten Signal ein Stellsignal für den rechten Scheinwerfer (50) und ein Stellsignal für den linken Scheinwerfer (40) des Kraftfahrzeugs (F₁) zum Einstellen der vertikalen Hell-Dunkel-Grenzen erzeugt,
- mit welchem eine rechte vertikale Hell-Dunkel-Grenze und eine linke vertikale Hell-Dunkel-Grenze zum Entblenden eines entgegenkommenden oder vorausfahrenden Fahrzeugs (F₂) eingestellt werden können,
- wobei die Steuervorrichtung (10) die,
- die rechte Hell-Dunkel-Grenze in einem vorgegebenen Schwenkbereich für die rechte Hell-Dunkel-Grenze zwischen einer rechten Grenze und einer linken Grenze einstellt und
- die linke Hell-Dunkel-Grenze in einem vorgegebenen Schwenkbereich zwischen einer linken Grenze und einer rechten Grenze einstellt
**dadurch gekennzeichnet,**
- **dass** die Steuervorrichtung (10) über einen zweiten Eingang ein zweites Signal einliest, welches den Radius einer von dem Kraftfahrzeug durchfahrenen oder zu durchfahrenden Kurve anzeigt, und
- **dass** die Steuervorrichtung (10) zumindest die linke Grenze des Schwenkbereichs der rechten Hell-Dunkel-Grenze und die rechte Grenze des Schwenkbereichs der linken Hell-Dunkel-Grenze in Abhängigkeit von dem zweiten Signal vorgibt.

## Claims

1. Device for controlling vertical cut-off lines in headlamps of a motor vehicle within a swivel range, wherein
- the control device (10) has a first input for a first signal indicating a direction in which a light source of a vehicle (F2) approaches the motor vehicle (F1) or moves away from the motor vehicle (F1) in the same driving direction, with reference to a longitudinal axis (l) of the motor vehicle.
- wherein the control device is designed and configured for generating a control signal for the right-hand headlamp (50) and a control signal for the left-hand headlamp (40) of the motor vehicle (F1) for adjusting the vertical cut-off lines depending on the first signal,
- via which a right-hand vertical cut-off line and a left-hand vertical cut-off line can be adjusted for not-dazzling a vehicle (F2) which is either oncoming or driving ahead,
- wherein the control device (10) is designed and configured for
- adjusting the right-hand cut-off line in a given swivel range for the right-hand cut-off line between a right-hand limit and a left-hand limit,
- adjusting the left-hand cut-off line in a given swivel range between a right-hand limit and a left-hand limit,
**characterized in**
- **that** the control device (10) has a second input for a second signal indicating the radius of a curve having been traveled or to be traveled by the motor vehicle and
- **that** the control device (10) is designed and configured for giving at least the left-hand limit of the swivel range of the right-hand cut-off line and the right-hand limit of the swivel range of the left-hand cut-off line depending on the second signal.

2. Control device (10) according to Claim 1, **characterized in that** the control device has a calculating means for determining the left-hand limit of the swivel range of the right-hand cut-off line and the right-hand limit of the swivel range of the left-hand cut-off line depending on the second signal.

3. Control device (10) according to Claim 2, **characterized in that** the calculating means is designed and configured for the determining the right-hand and/or left-hand cut-off line to be adjusted.

4. Control device (10) according to one of the Claims 2 to 3, **characterized in that** the calculating means is designed and configured for calculating the limits such that
- in a left turn, the left-hand limit of the swivel range of the right-hand cut-off line is moved toward the left and forms a first angle smaller than 0° with the longitudinal axis (l) of the motor vehicle and
- in a right turn, the right-hand limit of the swivel range of the left-hand cut-off line is moved toward the right and forms a second angle larger than 0° with the longitudinal axis of the motor vehicle.

5. Control device (10) according to Claim 4, **characterized in that** the calculating means is designed and configured for the calculating the limits such
- that in a left turn, the right-hand limit of the swivel range of the right-hand cut-off line is moved to the left by the first angle and
- that in a right turn, the left-hand limit of the swivel range of the left-hand cut-off line is moved to the right by the second angle.

6. Method for controlling vertical cut-off lines in headlamps of a motor vehicle within a swivel range, wherein
- via a first input, the control device (10) reads a first signal indicating the direction in which a light source of a vehicle (F2) heads towards the motor vehicle (F1) or moves away from the motor vehicle (F1) in the same driving direction, with reference to the longitudinal axis (l) of the motor vehicle,
- depending on the first signal, the control device (10) generates a control signal for the right-hand headlamp (50) and a control signal for the left-hand headlamp (40) of the motor vehicle (F1) for the adjustment of the vertical cut-off lines,
- via which a right-hand vertical cut-off line and a left-hand vertical cut-off line can be adjusted for not-dazzling a vehicle (F2) which is either oncoming or driving ahead,
- wherein the control device (10)
- adjusts the right-hand cut-off line in a given swivel range for a right-hand cut-off line between a right-hand limit and a left-hand limit and,
- adjusts the left-hand cut-off line in a given swivel range for a left-hand cut-off line between a right-hand limit and a left-hand limit,
**characterized in that**
- via a second input, the control device (10) reads a second signal indicating the radius of a curve having been traveled or to be traveled by the motor vehicle and
- that the control device (10) gives at least the left-hand limit of the swivel range of the right-hand cut-off line and the right-hand limit of the swivel range of the left-hand cut-off line depending on the second signal.

## Revendications

1. Dispositif pour commander des coupures clair-obscur verticales des projecteurs d'un véhicule automobile à l'intérieur d'une plage de pivotement,
- le dispositif de commande (10) présentant une première entrée pour un premier signal qui indique la direction relative à un axe longitudinal (l) du véhicule automobile dans laquelle une source de lumière d'un véhicule automobile (F₂) se déplace en sens inverse par rapport au véhicule automobile (F₁) ou se déplace devant le véhicule automobile (F₁) dans la même direction,
- le dispositif de commande étant approprié et configuré à engendrer un signal de réglage pour le projecteur droit (50) et un signal de réglage pour le projecteur gauche (40) du véhicule (F₁) pour régler les coupures clair-obscur verticales en fonction du premier signal,
- avec lequel une coupure clair-obscur verticale droite et une coupure clair-obscur verticale gauche peuvent être réglées pour le non-éblouissement d'un véhicule (F₂) en sens inverse ou qui précède,
- le dispositif de commande (10) étant approprié et configuré à
- régler la coupure clair-obscur droite dans une plage de pivotement prédéterminée pour la coupure clair-obscur droite entre une limite droite et une limite gauche et
- régler la coupure clair-obscur gauche dans une plage de pivotement prédéterminée entre une limite droite et une limite gauche,
**caractérisé en ce que**
- le dispositif de commande (10) présente une deuxième entrée pour un deuxième signal qui indique le rayon d'un virage effectué ou qui sera effectué par le véhicule automobile et
- le dispositif de commande (10) est approprié et configuré à définir au moins la limite gauche de la plage de pivotement de la coupure clair-obscur droite et la limite droite de la plage de pivotement de la coupure clair-obscur gauche en fonction du deuxième signal.

2. Dispositif de commande (10) selon la revendication 1, **caractérisé en ce que** le dispositif de commande dispose d'un moyen de calcul pour déterminer la limite gauche de la plage de pivotement de la coupure clair-obscur droite et la limite droite de la plage de pivotement de la coupure clair-obscur gauche en fonction du deuxième signal.

3. Dispositif de commande (10) selon la revendication 2, **caractérisé en ce que** le moyen de calcul est approprié et configuré à déterminer la coupure clair-obscur droite ou gauche à régler.

4. Dispositif de commande (10) selon l'une des revendications 2 à 3, **caractérisé en ce que** le moyen de calcul est approprié et configuré à calculer les limites de telle manière que
- la limite gauche de la plage de pivotement de la coupure clair-obscur droite soit décalée vers la gauche lors d'un virage à gauche et établisse un premier angle inférieur à 0° avec l'axe longitudinal (l) du véhicule automobile et
- la limite droite de la plage de pivotement de la coupure clair-obscur gauche soit décalée vers la droite lors d'un virage à droite et établisse un deuxième angle supérieur à 0° avec l'axe longitudinal du véhicule automobile.

5. Dispositif de commande (10) selon la revendication 4, **caractérisé en ce que** le moyen de calcul est approprié et configuré à calculer les limites de telle manière que
- la limite droite de la plage de pivotement de la coupure clair-obscur droite soit décalée du premier angle vers la gauche lors d'un virage à gauche et
- la limite gauche de la plage de pivotement de la coupure clair-obscur gauche soit décalée du deuxième angle vers la droite lors d'un virage à droite.

6. Procédé pour commander des coupures clair-obscur verticales des projecteurs d'un véhicule automobile à l'intérieur d'une plage de pivotement,
- le dispositif de commande (10) effectuant la lecture d'un premier signal à travers une première entrée qui indique la direction relative à un axe longitudinal (l) du véhicule automobile dans laquelle une source de lumière d'un véhicule automobile (F₂) se déplace en sens inverse par rapport au véhicule automobile (F₁) ou se déplace devant le véhicule automobile (F₁) dans la même direction,
- le dispositif de commande (10) en fonction du premier signal engendrant un signal de réglage pour le projecteur droit (50) et un signal de réglage pour le projecteur gauche (40) du véhicule automobile (F₁) pour régler les coupures clair-obscur verticales,
- avec lequel une coupure clair-obscur verticale droite et une coupure clair-obscur verticale gauche pouvant être réglées pour le non-éblouissement d'un véhicule (F₂) en sens inverse ou qui précède,
- le dispositif de commande (10) réglant
- la coupure clair-obscur droite dans une plage de pivotement prédéterminée pour la coupure clair-obscur droite entre une limite droite et une limite gauche et
- la coupure clair-obscur gauche dans une plage de pivotement prédéterminée entre une limite gauche et une limite droite,
**caractérisé en ce que**
- le dispositif de commande (10) effectue la lecture d'un deuxième signal à travers une deuxième entrée qui indique le rayon d'un virage effectué ou qui sera effectué par le véhicule automobile et
- le dispositif de commande (10) définit au moins la limite gauche de la plage de pivotement de la coupure clair-obscur droite et la limite droite de la plage de pivotement de la coupure clair-obscur gauche en fonction du deuxième signal.
